# EUROPÄISCHE PATENTSCHRIFT

(11) **EP 0 893 407 B1**
(45) Veröffentlichungstag und Bekanntmachung des Hinweises auf die Patenterteilung: **12.09.2001**
(21) Anmeldenummer: 98113849.8
(22) Anmeldetag: 24.07.1998
(51) Int. Cl.: C01B 17/90, C01B 25/234, A62D 3/00

(54) **Verfahren zur Wiederaufbereitung von Abfallmineralsäuren**
Process for recycling waste mineral acids
Procédé de recyclage des acides minéraux

(30) Priorität: 26.07.1997 DE 19732190
(43) Veröffentlichungstag der Anmeldung: 27.01.1999
(73) Patentinhaber: DLR Deutsches Zentrum für Luft- und Raumfahrt e.V., 51147 Köln (DE)
(72) Erfinder: Funken, Karl-Heinz, 53225 Bonn (DE); Lüpfert, Eckard, 53844 Troisdorf (DE); Maier, Hermann, 9470 St. Paul (AT)
(74) Vertreter: Jönsson, Hans-Peter, Dr.Dipl.-Chem.

(56) Entgegenhaltungen:
- EP-A- 0 027 607
- EP-A- 0 158 461
- DE-A- 4 216 499
- DE-A- 19 614 642
- US-A- 5 527 985

## Beschreibung

Die Erfindung betrifft ein Verfahren zur Wiederaufbereitung von Abfallmineralsäuren durch Abbau organischer Verunreinigungen mit Lichtenergie.

Bei zahlreichen Prozessen in der chemischen Industrie und der Mineralölraffination werden Mineralsäuren, beispielsweise Schwefelsäure als Reaktionspartner oder Hilfsstoff eingesetzt. Häufig fällt im Verlauf des jeweiligen Prozesses ein großer Anteil der eingesetzten Säure als Abfallsäure an.

Zu den wichtigsten Grundverfahren der organisch chemischen Technologie, bei denen Schwefelsäure, Oleum und/oder Schwefeltrioxid eingesetzt werden, gehören beispielsweise Sulfonierungen, Sulfochlorierungen, Sulfatierungen, Austauschreaktionen von Sulfonatgruppen, Nitrierungen, Hydratationen von Olefinen zu Alkoholen und Ethern, Verfahren zur Herstellung von Polyamid-Vorprodukten, Verfahren zur Herstellung von Methacrylsäureestem sowie anderen organischen Säuren oder deren Derivaten, Aufschlußverfahren und Verfahren zur Ablaugenbehandlung und Rückstandsverwertung in der Zellstoff- und Papierindustrie. Verfahren zur Verzuckerung von Stärke- und Zellulose-haltigen Materialien sowie zur Herstellung von Furfurol und Gelatine, Verfahren zur Herstellung von Nitrozellulose und von Sprengstoffen, Verfahren zur Schmierölraffination, Regeneration von Altölen, Wachsen, Teerölen und von Rohbenzol sowie allgemein Alkylieiungsverfahren in der Mineralölindustrie.

Industriell werden Phorsphorsäure und phosphorhaltige Verbindungen eingesetzt beim Färben von Textilien, zur Herstellung von Porzellankitten, Emaillen, Aktivkohle, Klebstoffen, Tensiden, Extraktionsmitteln, Weichmachern, Flammschutzmitteln, Antibiotika, Pflanzenschutzmitteln, Enzymen, Arzneimitteln und Kosmetika, zur Herstellung von Speziallacken, als Katalysator, zum Beispiel für Polymerisationen und Hydratisierungen, zum Phosphatieren, bei der Verarbeitung von Wolle und anderen Textilien, als Ätzmittel und zur Metallbehandlung. Abfallmineralsäuren sind häufig durch Nebenprodukte der Reaktion oder durch gelöste Stoffe, gegebenenfalls Mikropartikel, erheblich verunreinigt sowie mit Wasser stark verdünnt, so daß sie für technische Zwecke nicht weiter genutzt werden können und entsorgt werden müssen. Zum Schutz der Umwelt ist jedoch die Verklappung der Abfallsäure auf offener See oder auch die Deponierung nicht vertretbar und wird von einer zunehmenden Zahl von Staaten auch nicht mehr gestattet. Daher muß die Abfallmineralsäure, zu einer wiederverwertbaren Frischsäure aufbereitet werden. Im Stand der Technik werden bisher zwei verschiedene Verfahrenswege zur Wiederaufbereitung von Abfallschwefelsäure beschritten:
1. die Konzentrierung und gegebenenfalls Hochkonzentrierung verdünnter Abfallsäure, die häufig im Konzentrationsbereich von 20 bis 70% anfällt und
2. die Hochtemperaturwiederaufbereitung stark verunreinigter Abfallschwefelsäure unter Spaltung zu Wasser, Schwefeldioxid und Sauerstoff [Winnacker-Küchler Chemische Technologie Bd. 2. Hanser, 1982, S. 23-26, 61-75 (SO₂-Gewinnung, Aufarbeitung von Abfallschwefelsäure)(1982)].

Die Konzentrierung wird bisher vor allem zur Reinigung verdünnter und gering verunreinigter Abfallsäure oder bei leicht brennbaren Verunreinigungen eingesetzt, sowie für die Fälle, in denen keine hohen Ansprüche an die Reinheit des Regenerats gestellt werden (wie beispielsweise an die Schwefelsäure, die zum Ilmenit-Aufschluß bei der Titandioxid-Produktion eingesetzt wird). Werden jedoch höhere Ansprüche an das Regenerat gestellt, oder sollen stark verunreinigte Abfallsäuren durch Konzentrierung aufbereitet werden, so sind zusätzlich kostenintensive Reinigungsmaßnahmen erforderlich. Hierzu zählt insbesondere bei organisch verunreinigter Abfallschwefelsäure der Einsatz von starken Oxidationsmitteln wie Wasserstoffperoxid oder Salpetersäure. Weiterhin werden Konzentrierungsverfahren zu Vorkonzentrierung stark verdünnter Säuren eingesetzt, ehe die Säuren in die Spaltanlage geleitet werden. Bei der Hochkonzentrierung auf Schwefelsäuregehalte größer als 70 Gew.-% dehydratisiert die Schwefelsäure, und mit zunehmender Temperatur und steigender Schwefelsäurekonzentration stellt sich oberhalb der Flüssigphase ein steigender Schwefeltrioxidpartialdruck ein. Insbesondere wird die Schwefelsäure oberhalb ihres Siedepunktes in der Gasphase zu Schwefeltrioxid und Wasser gespalten. Diese Reaktion Ist reversibel, so daß nach Abkühlung wieder Schwefelsäure gewonnen werden kann.

Die Hochtemperaturaufbereitung wird, unter Spaltung des Schwefelsäuremoleküls, vor allem zur Regenerierung stark organisch verunreinigter Säure eingesetzt, sowie für die Fälle, in denen hohe Reinheitsanforderungen an das Regenerat gestellt werden oder besonders toxische Stoffe sicher zerstört werden müssen, Das Spaltprodukt Schwefeldioxid, erhalten aus Schwefeltrioxid, wird meist In einer nachfolgenden Schwefelsäurefabrik zu einer konzentrierten, verunreinigungsfreien Frischsäure weiterverarbeitet.

Gemäß EP 0 027 607 A1 werden oxidationsbeständlge anorganische Säuren wie Phosphorsäure, Schwefelsäure und Flußsäure, die organische Verunreinigungen enthalten, durch Oxidation dieser Verunreinigungen mit Hilfe eines anorganischen Oxidationsmittels gereinigt. Als Oxidationsmittel ist Wasserstoffperoxid besonders geeignet. Die Oxidation wird mit Vorteil in Gegenwart einer katalytisch wirksamen Menge einer wasserlöslichen Vanadin-Verbindung oder Chrom-Verbindung durchgeführt, üblicherweise bei einer Temperatur von 20 bis 120 °C. Der Katalysator wird in Form einer niedrigkonzentrierten wässrigen Lösung angewandt.

Bei den technisch angewendeten Prozessen zur Wiederaufbereitung von Abfallschwefelsäure ist es von besonderem Nachteil, daß diese mit erheblichen Betriebskosten zur Deckung des Energiebedarf und im Falle der Hochtemperaturspaltung mit zusätzlichen Investitions- und Betriebskosten für eine Schwefelsäurefabrik belastet sind. Ein weiterer Nachteil der heute technisch realisierten Verfahren besteht darin, daß der Energiebedarf in der Regel durch Verbrennung fossiler Brennstoffe gedeckt werden muß. Es wurden jedoch auch Anlagen zur Nutzung der direkten solaren Strahlung, wie Dish- und Turmsysteme, die mit optisch konzentrierend wirkenden Reflektoren und mit Strahlungsempfängern (Receivern) ausgerüstet sind, im Hinblick auf die solarthermische Stromerzeugung entwickelt und realisiert, um den Einsatz fossiler Primärenergieträger zu verringern und um die mit der Verbrennung verbundenen Emissionen zu vermeiden.

Funken, K.-H.; Weinmann, O.; Knoche, K. F.; Sizmann, R.: DE 42 16 499 C2 "Verfahren zur Wiederaufbereitung von Abfallschwefelsäure", Weinmann, O.; Funken, K.-H.; Knoche, K. F.; Sizmann, R.: Thermal recovery of waste sulfuric acid with concentrated solar radiation. In: Solar Energy Materials 24 (1991), S. 674-682 und Weinmann, O.; Funken, K.-H.; Knoche, K. F.; Sizmann, R.: Oxidation of Organic Impurities in Waste Sulfuric Acid with Concentrated Solar Radiation Bd. 2. Proc. 6th Int. Symp. on Solar Thermal Concg. Technol., 1992. ISBN 84-7834-163-3, S. 1149-1165 haben vorgeschlagen, diese Möglichkeit auch zur Spaltung von Abfallschwefelsäure einzusetzen. Die Abfallschwefelsäure wird in den Receiver eingespritzt, dort erwärmt, dehydratisiert, verdampft und gespalten; sie ist direkt der hochkonzentrierten solaren Strahlung ausgesetzt. Die Reaktion findet in der heißen Dampfphase statt (Temperaturen 200 bis 1500 °C).

Aus US 4 042 334 A ist ein Reaktor für eine Vielzahl anorganischer und organischer Reaktionen bekannt, wobei die Reaktionspartner direkter Strahlung ausgesetzt werden; dabei kann die Strahlungsflußdichte bei 0,02 bis 100 MW/m² und die Strahlung selbst im sichtbaren Bereich liegen,

Die DE 32 16 420 A1 offenbart ein Verfahren zur Spaltung von verdünnter Schwefelsäure. Die Druckschrift betrifft ein Verfahren zur Spaltung von Schwefelsäure durch Pyrolyse bei einer Temperatur über 1000°C.

Die DE 30 18 664 A1 betrifft ein Verfahren und eine Vorrichtung zum Regenerieren von Schwefelsäure. Das Verfahren zum Regenerieren von verunreinigter Schwefelsäure unter indirekter Beheizung in Apparaturen aus oder zumindest beschichtet mit Email, ist dadurch gekennzeichnet, daß die verunreinigte Säure mit einer Konzentration von 90 bis 98,3 Gew.-% Schwefelsäure in eine Reinigungseinheit geleitet, dort in eine Aufheizzone bei Temperaturen zwischen 140 bis 330 °C auf mindestens 96 Gew.-% Schwefelsäure aufkonzentriert, dann einer Reaktionszone und anschließend einer Nachreaktionszone zugeführt wird, in der Temperaturen bis 330 °C aufrechterhalten und die Säure in der gesamten Reinigungseinheit bei Normaldruck oder vermindertem Druck gereinigt wird.

Nach der Produktion phosphorhaltiger Verbindungen oder nach ihrer Anwendung verbleiben häufig phosphorsaure oder stark phosphorhaltige, organisch verunreinigte Rückstände. Eine gezielte Wiederaufbereitung organisch verunreinigter, gebrauchter Phosphorsäuren oder stark phosphorhaltiger Rückstände zu frischer, wiederverwendbarer Phosphorsäure ist nicht Stand der Technik. Allerdings kann man derartige Rückstände zur Zerstörung gegebenenfalls stark toxischer Inhaltsstoffe der Hochtemperaturverbrennung zuführen. Diese Behandlungsmethode führt jedoch zum Verlust des Phosphors beziehungsweise der Phosphorsäure.

Zur Aufbereitung von Abwässern und anderen Abfällen sind allgemeine Verfahren bekannt, die eine sogenannte Naßoxidation der organischen und anorganischen Inhaltsstoffe bewirken. Zum einen wird Wasserstoffperoxid als Oxidationsmittel eingesetzt. Der pH-Wert muß im sauren Bereich eingestellt werden, was insbesondere bei Abwässern zu einem signifikanten Säureverbrauch und zusätzlicher Salzfracht führt. Weiter sind Verfahren mit Ozon, Hochdruck=Sauerstoff oder in überkritischen Fluiden bekannt,

Die Bestrahlung in einer Zwischen- oder Nachbehandlungsstufe mit UV-Licht dient der Erzeugung von Hydroxyl-Radikalen mit hohem Oxidationspotential im Abwasser.

Von Wlassics I.; Alfieri, M.; Visentin, W.: Hydrogen Peroxide with Cu²⁺ Oxidises Chlorinated Wastes. In: Chemical Technology Europe (1995), Nr. 3, S. 28-31 (Ausimont); Wlassics, I.; Alfieri, M.; Visentin, W.: Process for oxidizing organic materials with hydrogen peroxide under conditions of irradiation in aqueous phase, EP 0 540 972 A1; Wlassics,I.; Burzio, F.; Alfieri, M.: Process for the disposal of chlorinated organic products by sulphonation or nitration and subsequent oxidation EP 0 603 533; Wlassics, I.; Burzio, F.; Alfieri, M.: Process for the disposal of chlorinated organic products by oxidation treatment, EP 0 593 895; werden Verfahren beschrieben, chlorierte organische Produkte mit wäßriger Wasserstoffperoxid-Lösung in Anwesenheit von Übergangsmetall-lonen zu oxidieren, was zu einer Reduzierung des chemischen Sauerstoffbedarfs (CSB) führt.

Bei den bisher bekannten Flüssigoxidationsverfahren für die Wiederaufbereitung von Abfallmineralsäuren ist es von Nachteil, daß nicht alle organischen Verbindungen in ausreichendem Maß abgebaut werden. Daher muß häufig der technisch und energetisch weit aufwendigere Weg der Hochtemperaturspaltung der Abfallmineralsäure beziehungsweise der Hochtemperaturverbrennung gewählt werden.

Die Aufgabe der vorliegenden Erfindung bestand darin, ein Verfahren zur Verfügung zu stellen, mit dem insbesondere organisch verunreinigte Abfallmineralsäure möglichst einfach und auf direktem Wege wiederaufbereitet und regeneriert werden kann, so daß die Hochtemperaturspaltung beziehungsweise die Hochtemperaturverbrennung und der damit verbundene hohe Energieverbrauch vermieden werden kann, dennoch eine bessere Reinigung als mit bisherigen Aufbereitungs- und Aufkonzentrierungsverfahren erzielt werden kann. Die Menge kostenträchtiger zugeführter Hilfsstoffe ist möglichst gering zu halten.

Weiterhin soll das Verfahren den Einsatz von Sonnenenergie für die Wiederaufbereitung und Regenerierung von Abfallmineralsäure gestatten, um den Verbrauch fossiler Energieträger zu vermindern.

Die vorstehend genannte Aufgabe wird gelöst durch ein Verfahren zur Wiederaufbereitung von Abfallmineralsäure durch Abbau organischer Verunreinigungen im Temperaturbereich bis zum Siedepunkt unter Einsatz von Lichtenergie, wobei man der Abfallmineralsäure Übergangsmetallkatalysatoren und ein Oxidationsmittel oder das Oxidationsmittel allein zusetzt und diese dem Licht einer Lichtquelle aussetzt, und man das Oxidationsmittel kontinuierlich oder diskontinuierlich zusetzt und die Konzentration des Katalysators < 1 % ist. Die Strahlung der Lampe oder des Solarkonzentrators bewirkt eine Erwärmung und den Abbau der organischen Inhaltsstoffe. Bei dem Oxidationsmittel kann es sich insbesondere um ein Peroxid, beispielsweise ein Wasserstoffperoxid, ein Peroxosulfat, ein Peroxodisulfat oder um ein Percarbonat handeln.

Es wurde festgestellt, daß der Abbau organischer Verbindungen, gemessen an der TOC-Reduktion, unter Zusatz von Übergangsmetallkatalysatoren und unter der Einwirkung von Licht, bei der es sich insbesondere um solare Strahlung handeln kann, im direktbestrahlten Glasreaktor deutlich beschleunigt wird gegenüber einer rein thermischen Behandlung.

Mit Hilfe der vorliegenden Erfindung ist es möglich, industriell anfallende Abfallmineralsäuren dem obengenannten Verfahren zu unterwerfen, die in herkömmlichen Anlagen nicht durch Flüssigphasenoxidation hinreichend zu reinigen sind. Bei den wiederautzubereitenden Abfallmineralsäuren dominieren die Eigenschaften der verdünnten Säure die der Acidität. Für Abfallschwefelsäure tritt bei Konzentrationen >70 Gew.-% mit zunehmender Konzentration die Oxidationswirkung mehr in den Vordergrund. Technisch und wirtschaftlich macht es daher Sinn, verdünnte Abfallmineralsäuren, beispielsweise Abfallschwefelsäure, mit einer Konzentration von wenigstens 20 Gew.-% durch Aufkonzentrieren zu recyceln. Bei dem erfindungsgemäßen Verfahren stehen also die stofflichen Eigenschaften der Mineralsäure im Interesse des Anwenders. Bei der Entsorgung einer sehr stark verdünnten Mineralsäure steht dagegen eine umweltverträgliche Abwassereinleitung in einen Vorfluter im Interesse des Anwenders. Er wird dieses Abwasser üblicherweise in einer Neutralisationsanlage behandeln.

Diese erfindungsgemäße photochemische Technologie führt damit zu einem Verfahren, bei der Aufbereitung von Abfallmineralsäure im Vergleich zur konventionellen, rein thermischen Aufbereitung deutlich kürzere Verweilzeiten in der Reaktionskammer einzustellen bzw. bessere Abbauraten zu erreichen. Ein erhöhter Raum-Zeit-Umsatz bedingt niedrigere spezifische Anlagenkosten. Durch Katalysatorzusatz und die Bestrahlung wird der Verbrauch an Oxidationsmitteln wie Wasserstoffperoxid verringert.

Das erfindungsgemäße Verfahren ist somit in besonderer Weise geeignet, optisch konzentrierte Lichtstrahlung zur Beschleunigung des Abbaus organischer Verunreinigungen bei der Abfallmineralsäureaufbereitung zu verwenden. Dieser Aspekt betrifft auch die Forderung nach dem Ersatz fossiler Primärenergieträger durch regenerative Energien. In Staaten mit guten solaren Bedingungen kann die konzentrierte Strahlung vorteilhaft durch hochkonzentrierende Solaranlagen, wie Zentralreceiversysteme, Paraboloidkonzentratoren, Fix-Fokus-Konzentratoren oder Solaröfen oder durch niedrig konzentrierende Solaranlagen, wie CPC-Kollektoren, elliptische oder sphärische Spiegel, Parabolrinnen oder Fresnel-Linsen bereitgestellt werden. Durch entsprechende Modifizierungen dieser Anlagen gelingt es, fossile Energieträger auch bei der Abfallmineralsäure-Wiederaufbereitung zu ersetzen. In Ländern mit weniger geeigneten solaren Bedingungen läßt sich der reaktionsbeschleunigende Effekt konzentrierter Strahlung aus Leistungsdichtestarken Lampen vorteilhaft nutzen. Dementsprechend besteht eine besondere Ausführungsform der vorliegenden Erfindung darin, daß als Strahlungsquelle künstliche Strahler eingesetzt werden, deren Lichtstrahlung mit einer optischen Anordnung aus Spiegeln und/oder Linsen in die als direkt absorbierenden Receiver ausgelegte Reaktionskammer gelangt.

In einer bevorzugten Ausführungsform der vorliegenden Erfindung ist die Abfallmineralsäure ausgewählt aus Schwefelsäure und Phosphorsäure. Besonders hervorzuheben ist an dieser Stelle die Schwefelsäure, deren Wiederaufbereitung auch in großen Maßstäben erforderlich ist.

Besonders bevorzugt im Sinne der vorliegenden Erfindung wird die Abfallmineralsäure im lichtdurchlässigen Reaktor dem Licht der Sonne ausgesetzt. Hierbei ist es selbstverständlich möglich, das Licht der Sonne mit Linsen oder Spiegeln in an sich bekannten Verfahren zu konzentrieren. Alternativ zu der Bestrahlung mit Sonnenlicht ist es selbstverständlich im Sinne der vorliegenden Erfindung möglich, das Verfahren zur Wiederaufbereitung durch Einwirkung von Licht einer künstlichen Lichtquelle durchzuführen. Besonders bevorzugt in diesem Sinne wird die Lichtquelle in die Abfallmineralsäure eingetaucht,

Für die Übergangsmetallkatalysatoren stehen dem Fachmann eine Reihe von Verbindungen zur Verfügung, die einen Abbau der organischen Verunreinigungen bewirken. Besonders bevorzugt im Sinne der vorliegenden Erfindung sind die Übergangsmetallkatalysatoren ausgewählt aus Übergangsmetallsalzen oder-Ionen. Besonders gute Ergebnisse bei der Reduktion der organischen Bestandteile wurden dann gefunden, wenn die Übergangsmetallsalze oder -lonen ausgewählt sind aus Eisen-, Kupfer- und/oder Vanadiumsalzen oder-Ionen. Hierbei ist es nicht unbedingt erforderlich, die genannten Metallsalze oder-Ionen separat zuzusetzen, wenn beispielsweise eisenhaltige, kupferhaltige und/oder vanadiumhaltige Abfallmineralsäuren eingesetzt werden.

Alternativ oder zusätzlich zu den genannten Übergangsmetallsalzen kann als Übergangsmetallkatalysator beispeilsweise auch Titandioxid eingesetzt werden. Auch ist es möglich, titandioxidhaltige Abfallschwefelsäure direkt zuzusetzen.

Eine weitere bevorzugte Ausführungsform der vorliegenden Erfindung besteht darin, daß man Sauerstoff oder sauerstoffhaltiges Gas in den Reaktor kontinuierlich oder diskontinuierlich einleitet Mit dieser Einleitung des Gases wird die Reaktionsausbeute deutlich verbessert. Bevorzugterweise arbeitet man möglichst in der Nähe des Siedepunktes der verdünnten Abfallmineralsäure. Im Falle der Wiederaufbereitung von verdünnter Abfallschwefelsäure ist es demgemäß besonders bevorzugt, wenn die Temperatur < 120°C, insbesondere <110°C ist.

### Beispiele:

In einem Rundkolben aus Borsilikatglas wurde eine wäßrige, verdünnte Abfallschwefelsäure aufbereitet (Vorlage jeweils 20 ml). Der Rundkolben befand sich in unmittelbarer Nähe des Fokus eines Paraboloid-Solarkonzentrators (Dish) mit 1,8 m² Reflektorgröße und 0,64 m Brennweite, dessen Leistung durch eine Abschattung auf 45% reduziert wurde. Die Abfallschwefelsäure wurde durch die konzentrierte Strahlung bis zum Sieden erhitzt und unter Rückfluß'gekocht.

Der Fortschritt des Abbaus organischer Inhaltsstoffe wurde durch Analyse des Summenparameters TOC (total organic carbon) bestimmt. Die TOC-Anfangskonzentration in der untersuchten Abfallschwefelsäure betrug 1334 mg/l. Es wurde jeweils 0,2 ml einer 1-molaren Lösung FeSo₄ beziehungsweise CuCl₂, 2 ml einer 0,1-molaren Lösung NaVO₃ beziehungsweise 246 mg TiO₂ des Katalysators und 425 µl einer 35 %igen Wasserstoffperoxid-Lösung zugegeben.

| Beispiele | Zugabe | Versuchszeit [h] | Rest-TOC unbestrahlt | Rest-TOC bestrahlt |
|---|---|---|---|---|
| Vgl. 1 | - | 1,5 | 100% | 93 % |
| Vgl. 2 | FeSO₄ | 1 | 100 % | 100 % |
| Vgl, 3 | FeSO₄, CuCl₂ | 1,5 | 100 % | 87 % |
| Vgl. 4 | NaVO₃ | 1,5 | 94 % | 85 % |
| Vgl. 5 | TiO₂ | 1,5 | 100 % | 94 % |
| 1 | FeSO₄, H₂O₂ | 1,5 | 50 % | 46 % |
| 2 | FeSO₄, CuCl₂, H₂O₂ | 1,5 | 87 % | 68 % |
| 3 | NaVO₃, H₂O₂ | 1,5 | 57 % | 25 % |
| 4 | TiO₂. H₂O₂ | 1,5 | 89 % | 41 % |
| 5 | H₂O₂ | 1,5 | 100 % | 71 % |

Die vorstehende Tabelle zeigt die Messergebnisse, die den Einfluß der Bestrahlung auf den Abbau in Abhängigkeit von der Zugabe von Ionen und von H₂O₂ als Oxidationsmittel.

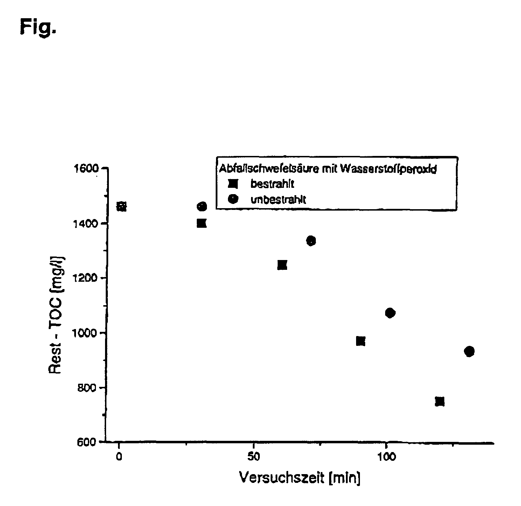

Die Figur zeigt als Beispiel mit ausschließlicher Zugabe von H₂O₂ den beschleunigten Abbau durch die konzentrierte Solarstrahlung.

## Patentansprüche

1. Verfahren zur Wiederaufbereitung von Abfallmineralsäure durch Abbau organischer Verunreinigungen im Temperaturbereich bis zum Siedepunkt unter Einsatz von Lichtenergie, wobei man der Abfallmineralsäure Übergangsmetallkatalysatoren und ein Oxidationsmittel oder das Oxidationsmittel allein zusetzt und diese dem Licht einer Lichtquelle aussetzt, und man das Oxidationsmittel kontinuierlich oder diskontinuierlich zusetzt und die Konzentration des Katalysators < 1 % ist.

2. Verfahren nach Anspruch 1, **dadurch gekennzeichnet, daß** die Abfallmineralsäure Schwefelsäure oder Phosphorsäure ist.

3. Verfahren nach Anspruch 1, **dadurch gekennzeichnet, daß** man die Abfallmineralsäure im lichtdurchlässigen Reaktor dem Licht der Sonne aussetzt.

4. Verfahren nach Anspruch 3, **dadurch gekennzeichnet, daß** man das Licht der Sonne mit Linsen oder Spiegeln konzentriert.

5. Verfahren nach Anspruch 1, **dadurch gekennzeichnet, daß** man die Lichtquelle in die Abfallmineralsäure eintaucht.

6. Verfahren nach Anspruch 1, **dadurch gekennzeichnet, daß** die Übergangsmetallkatalysatoren aus Übergangsmetallsalzen oder-lonen ausgewählt sind.

7. Verfahren nach Anspruch 6, **dadurch gekennzeichnet, daß** die Übergangsmetallsalze oder -lonen ausgewählt sind aus Eisen-, Kupfer- und/oder Vanadiumsalzen oder-Ionen.

8. Verfahren nach Anspruch 7, **dadurch gekennzeichnet, daß** man eisenhaltige, kupferhaltige und/oder vanadiumhaltige Abfallmineralsäure zusetzt.

9. Verfahren nach einem der Ansprüche 1 bis 8, **dadurch gekennzeichnet, daß** Titandioxid als Übergangsmetallkatalysator zugesetzt wird.

10. Verfahren nach Anspruch 9, **dadurch gekennzeichnet, daß** man titandioxidhaltige Abfallschwefelsäure zusetzt.

11. Verfahren nach einem der Ansprüche 1 bis 10, **dadurch gekennzeichnet, daß** die Konzentration des Katalysators 1 bis 500 ppm beträgt.

12. Verfahren nach einem oder mehreren der Ansprüche 1 bis 11, **dadurch gekennzeichnet, daß** das Oxidationsmittel ein Peroxid, insbesondere ein Wasserstoffperoxid, ein Peroxosulfat, ein Peroxodisulfat und/oder ein Percarbonat ist.

13. Verfahren nach einem der Ansprüche 1 bis 12, **dadurch gekennzeichnet, daß** Sauerstoff oder sauerstoffhaltiges Gas in den Reaktor kontinuierlich oder diskontinuierlich eingeleitet wird.

14. Verfahren nach einem der Ansprüche 1 bis 13, **dadurch gekennzeichnet, daß** die Temperatur < 120 °C, insbesondere < 110 °C beträgt.

## Claims

1. A process for the reprocessing of waste mineral acid by decomposing organic contaminants at temperatures in a range of up to the boiling point using light energy, wherein transition metal catalysts and an oxidant, or the oxidant alone, are added to said waste mineral acid which is then exposed to the light from a light source, and the oxidant is added continuously or discontinuously, and the concentration of the catalyst is < 1%.

2. The process according to claim 1, **characterized in that** said waste mineral acid is sulfuric acid or phosphoric acid.

3. The process according to claim 1, **characterized in that** said waste mineral acid is exposed to sunlight in a light-permeable reactor.

4. The process according to claim 3, **characterized in that** the sunlight is concentrated with lenses or mirrors.

5. The process according to claim 1, **characterized in that** said light source is immersed in the waste mineral acid.

6. The process according to claim 1, **characterized in that** said transition metal catalysts are selected from transition metal salts or ions.

7. The process according to claim 6, **characterized in that** said transition metal salts or ions are selected from iron, copper and/or vanadium salts or ions.

8. The process according to claim 7, **characterized in that** iron-containing, copper-containing and/or vanadium-containing waste mineral acid is added.

9. The process according to any of claims 1 to 8, **characterized in that** titanium dioxide is added as said transition metal catalyst.

10. The process according to claim 9, **characterized in that** waste sulfuric acid containing titanium dioxide is added.

11. The process according to any of claims 1 to 10, **characterized in that** the concentration of said catalyst is from 1 to 500 ppm.

12. The process according to one or more of claims 1 to 11, **characterized in that** said oxidant is a peroxide, especially a hydrogen peroxide, a peroxosulfate, a peroxodisulfate and/or a percarbonate.

13. The process according to any of claims 1 to 12, **characterized in that** oxygen or an oxygen-containing gas is continuously or discontinuously fed into the reactor.

14. The process according to any of claims 1 to 13, **characterized in that** the temperature is < 120 °C, in particular, < 110 °C.

## Revendications

1. Procédé de retraitement d'un acide minéral résiduaire par dégradation d'impuretés organiques à une température comprise dans la plage allant jusqu'au point d'ébullition, par utilisation d'énergie lumineuse, dans lequel on ajoute à l'acide minéral résiduaire des catalyseurs à base de métal de transition et un oxydant, ou l'oxydant seul, on l'expose à la lumière d'une source lumineuse, et on ajoute l'oxydant d'une manière continue ou discontinue, la concentration du catalyseur étant <1 %.

2. Procédé selon la revendication 1, **caractérisé en ce que** l'acide minéral résiduaire est de l'acide sulfurique ou de l'acide phosphorique.

3. Procédé selon la revendication 1, **caractérisé en ce qu'**on expose à la lumière du soleil l'acide minéral résiduaire dans le réacteur transparent à la lumière.

4. Procédé selon la revendication 3, **caractérisé en ce qu'**on concentre la lumière du soleil à l'aide de lentilles ou de miroirs.

5. Procédé selon la revendication 1, **caractérisé en ce qu'**on immerge la source lumineuse dans l'acide minéral résiduaire.

6. Procédé selon la revendication 1, **caractérisé en ce que** les catalyseurs à base de métal de transition sont choisis parmi les sels ou ions de métaux de transition.

7. Procédé selon la revendication 6, **caractérisé en ce que** les sels ou ions de métaux de transition sont choisis parmi les sels ou ions de fer, de cuivre et/ou de vanadium.

8. Procédé selon la revendication 7, **caractérisé en ce qu'**on ajoute un acide minéral résiduaire contenant du fer, du cuivre et/ou du vanadium.

9. Procédé selon l'une des revendications 1 à 8, **caractérisé en ce qu'**on ajoute du dioxyde de titane en tant que catalyseur à base de métal de transition.

10. Procédé selon la revendication 9, **caractérisé en ce qu'**on ajoute de l'acide sulfurique résiduaire contenant du dioxyde de titane.

11. Procédé selon l'une des revendications 1 à 10, **caractérisé en ce que** la concentration du catalyseur est de 1 à 500 ppm.

12. Procédé selon l'une ou plusieurs des revendications 1 à 11, **caractérisé en ce que** l'oxydant est un peroxyde, en particulier un peroxyde d'hydrogène, un peroxosulfate, un peroxodisulfate et/ou un percarbonate.

13. Procédé selon l'une des revendications 1 à 12, **caractérisé en ce qu'**on introduit en continu ou d'une manière discontinue dans le réacteur de l'oxygène ou un gaz contenant de l'oxygène.

14. Procédé selon l'une des revendications 1 à 13, **caractérisé en ce que** la température est <120°C, en particulier <110°C.
